# EUROPÄISCHE PATENTSCHRIFT

(11) **EP 1 214 537 B1**
(45) Veröffentlichungstag und Bekanntmachung des Hinweises auf die Patenterteilung: **01.12.2004**
(21) Anmeldenummer: 00974279.2
(22) Anmeldetag: 02.09.2000
(51) Int. Cl.: F16J 1/00

(54) **GEGOSSENER KOLBEN**
CAST PISTON
PISTON COULE

(30) Priorität: 04.09.1999 DE 19942293
(43) Veröffentlichungstag der Anmeldung: 19.06.2002
(73) Patentinhaber: ROBERT BOSCH GMBH, 70442 Stuttgart (DE)
(72) Erfinder: BURKART, Stefan, 87549 Rettenberg (DE); STRATMANN, Egon, 71701 Schwieberdingen (DE)
(86) Internationale Anmeldenummer: PCT/DE2000/003023
(87) Internationale Veröffentlichungsnummer: WO 2001/018432

(56) Entgegenhaltungen:
- WO-A-97/18403
- DE-A- 4 243 445
- DE-C- 4 233 896
- US-A- 5 031 511

## Beschreibung

Die Erfindung geht aus von einem gegossenen Kolben, insbesondere von einem spritzgegossenen Kolben aus faserverstärktem Kunststoff, nach dem Oberbegriff des Patentanspruchs 1, sowie von einem Verfahren zur Herstellung eines gegossenen Kolbens nach den Merkmalen des Oberbegriffs des Patentanspruchs 5.

Ein spritzgegossener Kolben ist aus der DE 42 33 896 C2 bekannt. Der bekannte Kolben ist in einer Aufnahmebohrung eines Gehäuses gleitbar aufgenommen und als bescherförmiger Körper mit einem Kolbenboden und einer hiervon wegragenden hülsenförmigen Kolbenwand ausgebildet. Zwischen der von der Kolbenwand wegweisenden Fläche des Kolbenbodens und dem Boden der Aufnahmebohrung ist ein Druckraum gebildet, welcher sich bei Druckbeaufschlagung gegen die Kraft einer gegen den Kolben vorgespannten Feder vergrößert.

Der bekannte Kolben ist durch Spritzgießen in einem Spritzgießwerkzeug hergestellt, welches ebenfalls becherförmig ausgestaltet ist und an seinem Boden einen Spritzkanal zum Druckeinspritzen eines thermoplastischen Kunststoffes in einen Raum zwischen der Werkzeuginnenwand und einem zylindrischen Kern aufweist, wobei dieser mit unter Druck stehendem Spritzgut befüllte Zwischenraum gemäß der Geometrie des Kolbens geformt ist. Dabei bildet sich im Bereich des sogenannten Anspritzpunktes des gegossenen Kolbens, also gegenüber der Austrittsöffnung des Spritzkanals, an der im Betrieb druckbeaufschlagten Fläche des Kolbenbodens ein insofern störender Anspritzkegel aus, als dieser nach erfolgtem Einsetzen des Kobens in die Aufnahmebohrung des Gehäuses in den Druckraum ragt und deshalb z.B. durch spanende Bearbeitung entfernt werden muß, was mit einem gewissen Fertigungsaufwand verbunden ist.

Aus US-A-5031511 ist ein gattungsgemäßer Kolben mit einem an seinem Boden mittig angeformten Zapfen bekannt, welcher von der Fläche aufragt, die von der druckbeaufschlagten Fläche wegweist. An dem Zapfen ist ein schwenkbewegliches Druckstück zum Anpressen eines Bremsbelags gegen eine Bremsscheibe einer Scheibenbremse aufgenommen. Der Boden des Kolbens ist zapfenseitig mit einer ausgerundeten Ausnehmung geringer Tiefe versehen, welche sich mit radialem Abstand zum Zapfen erstreckt und einen Freiraum bereitstellt, in den das Druckstück bei einer Schwenkbewegung eintauchen kann. Über die Lage des Anspritzpunktes am Kolben ist aus US-A-5031511 nichts bekannt.

In WO-A-97/18403 ist in Figur 7 ein gegossener Kolben offenbart, der eine axial tiefgehende umlaufende Ausnehmung hat, welche von der Stirnseite des Kolbens ausgeht, die von der druckbeaufschlagbaren Fläche wegweist. Die Ausnehmung begrenzt einen Zapfen, der ebenso wie die Ausnehmung und die Stirnseite des Kolbens von einer beim Spritzgießen des Kolbens eingeformten Blechformteil umhüllt ist. Folglich kann ein Anspritzpunkt nur im Bereich der druckbeaufschlagten Fläche oder des Kolbenmantels liegen.

Demnach wird gemäß der Erfindung der Anspritzpunkt auf die andere, von der druckbeaufschlagten Fläche des Kolbenbodens wegweisende Seite vorlegt, weil der Anspritzkegel dort nicht störend wirkt. Da der Kolbenboden durch Druckbeaufschlagung des Druckraumes eine im wesentlichen auf Biegung beanspruchte Platte darstellt, bildet sich im Betrieb in bekannter Weise zum einen ein unter Druckspannungen stehender Bereich aus, welcher sich von der druckbeaufschlagten Fläche des Kolbenbodens bis zu einer neutralen Faser im Inneren des Kolbenbodens erstreckt, und zum andern ein unter Zugspannungen stehender Bereich, welcher von der neutralen Faser bis an die von der druckbeaufschlagten Fläche wegweisende Fläche des Kolbenbodens reicht. Würde man nun den Anspritzpunkt auf die von der druckbeaufschlagten Fläche wegweisende Fläche des Kolbenbodens ohne Vorsehen weiterer Maßnahmen verlegen, so befände sich der Anspritzpunkt an einer Stelle, an welcher die Zugspannungen am höchsten sind. Weil der Anspritzpunkt eines Gußteils bekanntermaßen mit Lunkern und Porositäten durchsetzt ist, sind die Festigkeitseigenschaften dort jedoch kritisch. Hinzu kommt, dass bei Gußwerkstoffen in der Regel die maximale Zugfestigkeit geringer ist als die maximale Druckfestigkeit, so dass es unter den hohen Drücken, welchen ein solcher Kolben im Betrieb ausgesetzt sein kann, zu Rissen und Brücken am Kolbenboden kommen kann.

Der Kolbenboden weist durch mindestens eine an seiner von der druckbeaufschlagten Fläche des Kolbenbodens wegweisenden Fläche vorhandene Ausnehmung im Bereich des Anspritzpunktes eine geringere Wandstärke auf als in den hieran angrenzenden Bereichen. Da die Lage der neutralen Faser des gesamten Kolbenbodens im wesentlichen durch die radial äußeren, an den mittigen Bereich des Anspritzpunktes angrenzenden Bereiche bestimmt wird, wird mittels der mindestens einen Ausnehmung im Bereich des Anspritzpunktes der auf der Zugspannungsseite liegende Wandbereich des Kolbenbodens ganz oder teilweise entfernt. Demzufolge wird durch die Ausnehmung im Bereich des festigkeitskritischen Anspritzpunktes der auf Zug belastete Wandbereich reduziert, wodurch der verbleibende Rest zugspannungsfrei oder überwiegend druckbelastet ist, was sich günstig auf die Festigkeitseigenschaften auswirkt.

Um die im Hinblick auf die Festigkeit ungünstigen Zugspannungen im Kolbenboden in der Nähe des Anspritzpunktes zu vermeiden, wird vorgeschlagen, dass die mindestens eine Ausnehmung derart tief ausgebildet ist, dass die von der druckbeaufschlagten Fläche wegweisende Fläche des Kolbenbodens im Bereich des Anspritzpunktes von der druckbeaufschlagten Fläche aus gesehen bis maximal an eine Ebene heranreicht, welche die neutrale Faser der an den Bereich des Anspritzpunktes angrenzenden Bereiche des Kolbenbodens enthält. Wenn Koplanarität zwischen dieser, die neutrale Faser enthaltenden Ebene und der von der druckbeaufschlagten Fläche wegweisenden Fläche des Kolbenbodens herrscht, sind die Zugspannungen in dieser Fläche gleich Null, während sie im Falle tieferer Ausnehmungen ausschließlich druckbelastet ist.

Durch die in den Unteransprüchen aufgeführten Maßnahmen sind vorteilhafte Weiterbildungen und Verbesserungen des im Patentanspruch 1 angegebenen Kolbens möglich.

Gemäß Unteranspruch 2 ist die mindestens eine Ausnehmung ringförmig ausgebildet und umschließt einen vom Kolbenboden wegragenden, mit der Kolbenachse koaxialen Kegelstumpf, an dessen freiem Ende sich der Anspritzpunkt befindet. Durch den zentral angeordneten Kegelstumpf befinden sich die festigkeitskritischen Porositäten in einem im wesentlichen spannungsfreien Bereich. Darüber hinaus entsteht ein Zusatzvolumen, das etwaige Gefügefehler, hervorgerufen durch fehlerhafte Spritzgußparameter, in einem fast spannungsfreien Bereich aufnehmen kann.

### Zeichnung

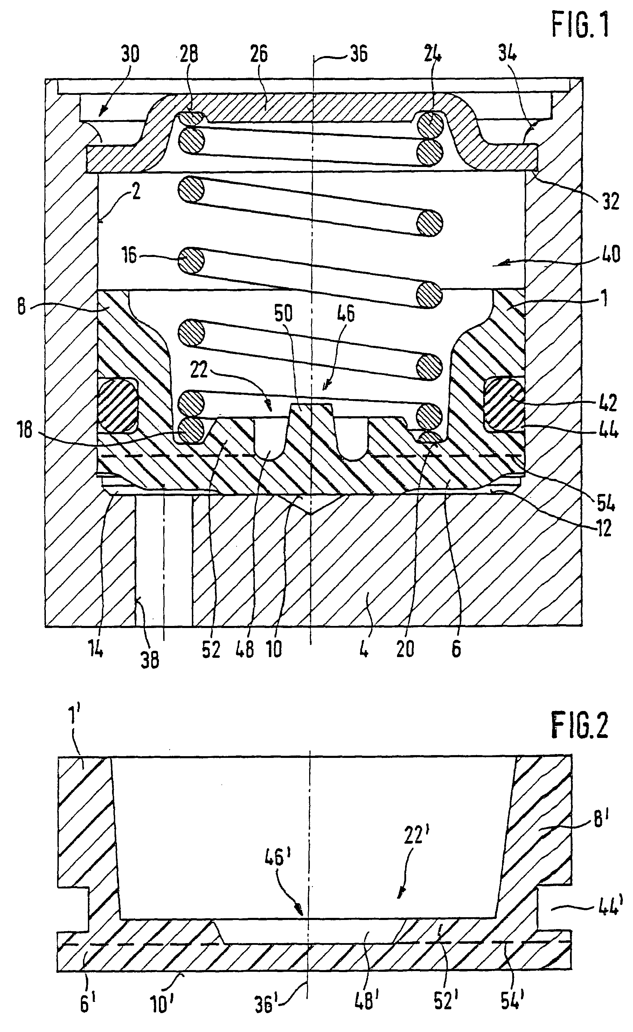

Ein Ausführungsbeispiel der Erfindung ist in der Zeichnung dargestellt und in der nachfolgenden Beschreibung näher erläutert. Figur 1 zeigt einen Längsschnitt durch ein bevorzugtes Ausführungsbeispiel eines Kolbens gemäß der Erfindung, welcher in einer Aufnahmebohrung eines Gehäuses gleitend aufgenommen ist.

Das Ausführungsbeispiel nach Figur 2 ist nur als Ergebnis des Verfahrens zur Herstellung eines gegossenen Kolbens gemäß Anspruch 5 in dessen zweiter Variante zu verstehen.

### Beschreibung des Ausführungsbeispiels

Bei dem in Fig.1 mit 1 bezeichneten Kolben handelt es sich gemäß einer bevorzugten Ausführungsform um einen Speicherkolben einer schlupfgeregelten Fahrzeugbremsanlage, welcher in einer als Sackloch ausgebildeten Aufnahmebohrung 2 eines Gehäuses 4 gleitbar aufgenommen ist. Der Speicherkolben 1 besteht beispielsweise aus faserverstärktem Kunststoff und ist als becherförmiger Körper mit einem Kolbenboden 6 und einer hiervon wegragenden hülsenförmigen Kolbenwand 8 ausgebildet. Zwischen der von der Kolbenwand 8 wegweisenden Fläche 10 des Kolbenbodens 6 und dem Boden 12 der Aufnahmebohrung 2 ist ein Druckraum 14 gebildet, welcher sich bei Druckbeaufschlagung gegen die Kraft einer gegen den Speicherkolben 1 vorgespannten Kolbenfeder 16 vergrößert, die den Speicherkolben 1 bei nachlassendem Druck wieder in die in Fig.1 gezeigte Ausgangslage zurückstellt.

Hierbei stützt sich das eine Ende 18 der Kolbenfeder 16 in einer radial äußeren Ringnut 20 ab, welche in der von der druckbelasteten Fläche 10 des Kolbenbodens 6 wegweisenden Fläche 22. ausgebildet ist, während das andere Ende 24 der Kolbenfeder 16 gegen einen die Aufnahmebohrung 2 des Gehäuses 4 verschließenden Deckel 26 gespannt ist. Hierzu ist an den Deckel 26 eine Vertiefung mit einer das andere Ende 24 der Kolbenfeder 16 aufnehmenden Ringnut 28 angeformt.

Der Deckel 26 ist vorzugsweise mittels einer Verstemmung 30 gegen einen radial inneren Absatz 32 der Aufnahmebohrung 2 druckdicht verspannt. Dazu wird vom Rand der Aufnahmebohrung 2 her Werkstoff gegen den Rand des Deckels 26 gedrängt, wodurch ein den Rand des Deckels 26 überdeckender Werkstoffwulst 34 entsteht.

Der Druckraum 14 steht mittels eines im Boden 12 der Aufnahmebohrung 2 ausgebildeten, parallel zur Kolbenachse 36 verlaufenden Kanals 38 mit einer nicht dargestellten Bremsleitung der schlupfgeregelten Fahrzeugbremsanlage in Verbindung, wodurch unter Druck stehende Bremsflüssigkeit in den Druckraum 14 gelangen und ihn gegen die Kraft der Kolbenfeder 16 vergrößern kann. Da der Betriebsdruck der Bremsflüssigkeit kurzzeitig 100 · 10⁵ Pa erreichen kann, ist die Druckbelastung des Kolbenbodens 6, welcher im wesentlichen eine auf Biegung beanspruchte Platte darstellt, entsprechend hoch.

Zur Abdichtung des Druckraumes 14 gegenüber dem verbleibenden, im wesentlichen druckfreien Gehäuseinnenraum 40 ist ein O-Ring 42 vorgesehen, welcher in einer am äußeren Umfang des Speicherkolbens 1 angeordneten Ringnut 44 aufgenommen ist.

Der Speicherkolben 1 wird vorzugsweise im Spritzgußverfahren hergestellt, wobei sich erfindungsgemäß der Anspritzpunkt 46 auf der von der druckbeaufschlagten Fläche 10 wegweisenden Fläche 22 des Kolbenbodens 6 befindet, vorzugsweise auf der Kolbenachse 36. Um das Auftreten von Zugspannungen im Bereich des festigkeitskritischen Anspritzpunktes 46 einzuschränken bzw. zu vermeiden, weist der auf Biegung beanspruchte Kolbenboden 6 im Bereich des Anspritzpunktes 46 eine beispielsweise ringförmige, mit der Kolbenachse 36 koaxiale Ausnehmung 48 auf, welche einen vom Kolbenboden 6 wegragenden, mit der Kolbenachse 36 koaxialen Kegelstumpf oder Speiser 50 umschließt, an dessen freiem Ende sich der Anspritzpunkt 46 befindet. Der Speiser 50 liegt dem Spritzkanal des nicht dargestellten Spritzwerkzeugs gegenüber bzw. ragt teilweise in ihn hinein.

Durch die mittels der ringförmigen Ausnehmung 48 erzeugte Lücke wird die Übertragung von Zugspannungen von den radial äußeren Bereichen 52 auf den Speiser 50 unterbunden. Da der Speiser 50 einen relativ geringen Durchmesser hat, werden dort bei Biegebelastung des Kolbenbodens 6 zudem keine nennenswerten Zugspannungen erzeugt.

Durch die ringförmige Ausnehmung 48 hat der Kolbenboden 6 im Bereich um den Anspritzpunkt 46 herum eine geringere Wandstärke als in den hieran angrenzenden, radial weiter außen befindlichen Bereichen 52. Vorzugsweise ist die ringförmige Ausnehmung 48 derart tief ausgebildet, daß die von der druckbeaufschlagten Fläche 10 wegweisende Fläche 22 des Kolbenbodens 6 im Bereich des Anspritzpunktes 46 in einer Ebene liegt, welche die neutrale Faser der an den Bereich des Anspritzpunktes 46 angrenzenden, radial äußeren Bereiche 52 des Kolbenbodens 6 enthält. In Fig.1 ist die neutrale Faser als strichpunktierte Linie 54 angedeutet. Hierdurch wird gewährleistet, daß bei Druckbeaufschlagung des Druckraumes 14 die von der druckbeaufschlagten Fläche 10 wegweisende Fläche 22 des Kolbenbodens 6 im Bereich des Anspritzpunktes 46 auf dem Niveau der neutralen Faser 54 der umgebenden, radial äußeren Bereiche 52 liegt und deswegen im wesentlichen spannungsfrei ist.

Alternativ könnte die von der druckbeaufschlagten Fläche 10 wegweisende Fläche 22 des Kolbenbodens 6 im Bereich des Anspritzpunktes 46 von der druckbeaufschlagten Fläche 10 aus gesehen einen geringen Abstand zur Ebene der neutralen Faser 54 aufweisen. In diesem Fall wäre dann der Kolbenboden 6 im Bereich des Anspritzpunktes 46 durch Druckspannungen belastet.

In Fig.2 ist ein Speicherkolben 1' dargestellt, bei welchem der Speiser durch spanende Bearbeitung entfernt wurde und deshalb im Bereich des Anspritzpunktes 46' eine vollzylindrische Ausnehmung 48' gebildet ist, welche koaxial mit der Kolbenachse 36' ist. Vorzugsweise befindet sich auch bei diesem Ausführungsbeispiel die von der druckbeaufschlagten Fläche 10' wegweisende Fläche 22' des Kolbenbodens 6' im festigkeitskritischen Bereich des Anspritzpunktes 46' auf dem Niveau der neutralen Faser 54' der radial äußeren Bereiche 52'. Alternativ könnte diese Fläche 22' im Breich des Anspritzpunktes 46' aber auch einen geringen Abstand zur Ebene der neutralen Faser 54' aufweisen.

Die Erfindung ist nicht auf Speicherkolben 1 aus faserverstärktem Kunststoff beschränkt. Vielmehr kann sie bei jeglicher Art von Kolben Anwendung finden, welche im Gießverfahren hergestellt sind und deshalb einen oder auch mehrere festigkeitskritische Anspritzpunkte aufweisen.

## Patentansprüche

1. Gegossener Kolben, insbesondere spritzgegossener Kolben (1) aus faserverstärktem Kunststoff, welcher in einer Aufnahmebohrung (2) eines Gehäuses (4) gleitbar sitzt und als becherförmiger Körper mit einem Kolbenboden (6) und einer hiervon wegragenden hülsenförmigen Kolbenwand (8) ausgebildet ist, wobei die von der Kolbenwand (8) wegweisende Fläche (10) des Kolbenbodens (6) druckbeaufschlagbar ist, die von der druckbeaufschlagbaren Fläche (10) wegweisende, andere Fläche (22) des Kolbenbodens mit mindestens einer Ausnehmung (48) versehen ist, so dass der Kolbenboden (6) hierdurch eine geringere Wandstärke als in den hieran angrenzenden Bereichen (52) aufweist, und mindestens ein einem Gießkanal eines Gießwerkzeugs zugeordneter Anspritzpunkt (46) vorhanden ist,
**dadurch gekennzeichnet,**
**dass** der Anspritzpunkt (46) auf der von der druckbeaufschlagbaren Fläche (10) wegweisenden, anderen Fläche (22) des Kolbenbodens (6) angeordnet ist und der Kolbenboden (6) im Bereich des Anspritzpunktes (46) die geringere Wandstärke aufweist und dass die mindestens eine Ausnehmung (48) derart tief ausgebildet ist, dass die von der druckbeaufschlagbaren Fläche (10) wegweisende, andere Fläche (22) des Kolbenbodens (6) im Bereich des Anspritzpunktes (46) von der druckbeaufschlagbaren Fläche (10) aus gesehen bis maximal an eine Ebene heranreicht, welche die neutrale Faser (54) der an den Bereich des Anspritzpunktes (46) angrenzenden Bereiche (52) des Kolbenbodens (6) enthält.

2. Kolben nach Anspruch 1, **dadurch gekennzeichnet, dass** die Ausnehmung (48) ringförmig ausgebildet ist und einen vom Kolbenboden (6) wegragenden, mit der Kolbenachse (36) koaxialen Kegelstumpf oder Speiser (50) umschließt, an dessen freiem Ende sich der Anspritzpunkt (46) befindet.

3. Kolben nach Anspruch 1, **dadurch gekennzeichnet, dass** auf der von der durckbeaufschlagbaren Fläche (10) wegweisenden, anderen Fläche (22) des Kolbenbodens (6) eine radial äußere Ringnut (20) vorgesehen ist, in welcher ein Ende (18) einer Kolbenfeder (16) abgestützt ist.

4. Kolben nach Anspruch 1, **dadurch gekennzeichnet, dass** er eine radial äußere, in der Kolbenwand (8) ausgebildete Ringnut (44) aufweist, in welcher ein Dichtring (42) aufgenommen ist, über welchen sich der Kolben (1) gegen eine Innenwandung der Aufnahmebohrung (2) des Gehäuses (4) abstützt.

5. Verfahren zur Herstellung eines gegossenen Kolbens entsprechend den Merkmalen des Oberbegriffs des Anspruchs 1, **dadurch gekennzeichnet, dass**
der Anspritzpunkt (46) auf der von der druckbeaufschlagbaren Fläche (10) wegweisenden, anderen Fläche (22) des Kolbenbodens (6) angeordnet wird und der Kolbenboden (6) im Bereich des Anspritzpunktes (46) die geringere Wandstärke aufweist,
dass die mindestens eine Ausnehmung (48) derart tief ausgebildet wird, dass die von der druckbeaufschlagbaren Fläche (10) wegweisende andere Fläche (22) des Kolbenbodens (6) im Bereich des Anspritzpunktes (46) von der druckbeaufschlagbaren Fläche (10) aus gesehen bis maximal an eine Ebene heranreicht, welche die neutrale Faser (54) der an den Bereich des Anspritzpunktes (46) angrenzenden Bereiche (52) des Kolbenbodens (6) enthält,
oder dass der Anspritzpunkt (46) an einem Speiser (50) vorgesehen wird, der nach dem Gießen des Kolbens (1) unter Ausbildung der Ausnehmung (48') entfernt wird, wobei die Ausnehmung (48') derart tief ausgebildet wird, dass sich die von der druckbeaufschlagbaren Fläche (10') wegweisende Fläche (22') des Kolbenbodens (6') im Bereich der Ausnehmung (48') auf dem Niveau der neutralen Faser (54') der radial äußeren Bereiche (52') befindet.

## Claims

1. Cast piston, especially an injection-moulded piston (1) consisting of fibre-reinforced plastic, which is slidingly located in a receiving bore (2) of a housing (4) and is configured in the form of a cupular body with a piston head (6) and a sleeve-shaped piston wall (8) extending away from the said piston head, it being possible for the surface (10) of the piston head (6) which is pointing away from the piston wall (8) to be subjected to pressure, the other surface (22) of the piston head, which is pointing away from the surface (10) which can be subjected to pressure, being provided with at least one recess (48), so that the piston head (6) has a smaller wall thickness as a result than in the regions (52) adjacent hereto, and there is at least one injection point (46) assigned to a casting channel of a casting mould, **characterized in that** the injection point (46) is arranged on the other surface (22) of the piston head (6), which is pointing away from the surface (10) which can be subjected to pressure, and the piston head (6) has the smaller wall thickness in the region of the injection point (46) and **in that** the at least one recess (48) is formed with such a depth that, in the region of the injection point (46), the other surface (22) of the piston head (6), which is pointing away from the surface (10) which can be subjected to pressure, extends at most, when seen from the surface (10) which can be subjected to pressure, as far as a plane which includes the neutral fibre (54) of the regions (52) of the piston head (6) that are adjacent to the region of the injection point (46).

2. Piston according to Claim 1, **characterized in that** the recess (48) is formed in an annular manner and encloses a truncated cone or feeder (50), which extends away from the piston head (6), is coaxial with the piston axis (36) and at the free end of which the injection point (46) is located.

3. Piston according to Claim 1, **characterized in that** a radially outer annular groove (20), in which one end (18) of a piston spring (16) is supported, is provided on the other surface (22) of the piston head (6), which is pointing away from the surface (10) which can be subjected to pressure.

4. Piston according to Claim 1, **characterized in that** it has a radially outer annular groove (44), which is formed in the piston wall (8) and which accommodates a sealing ring (42), by means of which the piston (1) is supported against an inner wall of the receiving bore (2) of the housing (4).

5. Method for producing a cast piston corresponding to the features of the precharacterizing clause of Claim 1, **characterized in that** the injection point (46) is arranged on the other surface (22) of the piston head (6), which is pointing away from the surface (10) which can be subjected to pressure, and the piston head (6) has the smaller wall thickness in the region of the injection point (46), **in that** the at least one recess (48) is formed with such a depth that, in the region of the injection point (46), the other surface (22) of the piston head (6), which is pointing away from the surface (10) which can be subjected to pressure, extends at most, when seen from the surface (10) which can be subjected to pressure, as far as a plane which includes the neutral fibre (54) of the regions (52) of the piston head (6) that are adjacent to the region of the injection point (46), or **in that** the injection point (46) is provided at a feeder (50), which is removed after the casting of the piston (1), thereby forming the recess (48'), the recess (48') being formed with such a depth that, in the region of the recess (48'), the surface (22') of the piston head (6') which is pointing away from the surface (10') which can be subjected to pressure is at the level of the neutral fibre (54') of the radially outer regions (52').

## Revendications

1. Piston coulé, notamment piston (1), injecté, formé de matière plastique renforcée par des fibres, ce piston coulissant dans un perçage de réception (2) d'un boîtier (4) et étant en forme de gobelet ayant un fond de piston (6) et une paroi de piston (8) en forme de manchon en saillie par rapport au fond,
la surface (10) du fond de piston (6) non située du côté de la paroi (8) du piston pouvant être sollicitée en pression, alors que l'autre surface (22) du fond de piston à l'opposé de la surface (10) soumise à la pression, comporte au moins une cavité (48) de sorte que le fond (6) du piston présente une épaisseur de paroi plus faible que dans les zones adjacentes (52), le piston ayant au moins un point d'injection (46) associé au canal de coulée d'un outil de coulée,
**caractérisé en ce que**
le point d'injection (46) est situé sur l'autre surface (22) du fond de piston (6), à l'opposé de la surface (10) soumise à la pression et le fond (6) du piston possède son épaisseur de paroi la plus faible au niveau du point d'injection (46), et
l'au moins une cavité (48) est suffisamment profonde pour que l'autre surface (22) du fond (6) du piston, à l'opposé de la surface (10) soumise à la pression, arrive au niveau du point d'injection (46) en partant de la surface (10) exposée à la pression, jusqu'au maximum dans un plan contenant la fibre neutre (54) des zones (52) du fond de piston (6) adjacentes au point d'injection (46).

2. Piston selon la revendication 1,
**caractérisé en ce que**
la cavité (48) a une forme annulaire et entoure un tronc de cône ou une masselotte (50), coaxiale à l'axe de piston (36), venant en saillie par rapport au fond (6) du piston, et dont l'extrémité libre correspond au point d'injection (46).

3. Piston selon la revendication 1,
**caractérisé en ce que**
sur l'autre surface (22) du fond (6) du piston à l'opposé de la surface (10) exposée à la pression, il est prévu une rainure annulaire (20) radialement extérieure, dans laquelle s'appuie une extrémité (18) d'un ressort de piston (16).

4. Piston selon la revendication 1,
**caractérisé en ce qu'**
il comporte une rainure annulaire (44) radialement extérieure, réalisée dans la paroi (8) du piston et recevant un joint d'étanchéité (42) par lequel le piston (1) s'appuie contre la paroi intérieure du perçage de réception (2) du boîtier (4).

5. Procédé de fabrication d'un piston coulé correspondant aux caractéristiques du préambule de la revendication 1,
**caractérisé en ce que**
le point d'injection se trouve sur l'autre surface (22) du fond (6) du piston non tournée vers la surface (10) exposée à la pression et le fond (6) du piston a une paroi d'épaisseur réduite au niveau du point d'injection (46),
au moins une cavité (48) a une profondeur telle qu'au niveau du point d'injection (46) l'autre surface (22) du fond (6) du piston à l'opposé de la surface (10) exposée à la pression, vue à partir de la surface (10) exposée à la pression, arrive au maximum jusque dans un plan contenant la fibre neutre (54) de la zone (52) du fond de piston (6) adjacent à la zone du point d'injection (46), ou encore le point d'injection (46) comporte une masselotte d'injection (50) qui est enlevée après la coulée du piston (1) en formant la cavité (48'), cette cavité (48') ayant une profondeur telle que dans la zone de la cavité (48') la surface (22') du fond de piston (6') à l'opposé de la surface (10') exposée à la pression se trouve au niveau de la fibre neutre (54') des zones radialement à l'extérieur (52').
